# EUROPÄISCHE PATENTANMELDUNG

(11) **EP 2 017 159 A2**
(43) Veröffentlichungstag der Anmeldung: **21.01.2009**
(21) Anmeldenummer: 08010575.2
(22) Anmeldetag: 11.06.2008
(51) Int. Cl.: B62B 9/28

(54) **Kinderwagen mit Zusatzablage**

(30) Priorität: 16.07.2007 DE 102007033023
(71) Anmelder: Kostner, Birgit, 33335 Gütersloh (DE)
(72) Erfinder: Kostner, Birgit, 33335 Gütersloh (DE)
(74) Vertreter: Pöhner, Wilfried Anton, Dr.

(57) **Zusammenfassung**

Die Erfindung bezieht sich auf einen Kinderwagen (30) mit Zusatzablage (1), wobei der Kinderwagen eine zumindest teilweise horizontale Auflagefläche (32) zum Tragen eines ersten Kindes aufweist, die von zwei Seitenwänden (34,36) begrenzt wird und die Zusatzablage aus einer etwa horizontal verlaufenden Ablagefläche (10) und wenigstens zwei Trägern (16,18) besteht, wobei sich die Träger (16,18) von der Ablagefläche (10) nach unten bis zur Auflagefläche (32) erstrecken und auf der Auflagefläche (32) aufliegen.

## Beschreibung

Die Erfindung bezieht sich auf einen Kinderwagen mit Zusatzablage, wobei der Kinderwagen eine zumindest teilweise horizontale Auflagefläche zum Tragen eines ersten Kindes aufweist, die von zwei Seitenwänden begrenzt wird und die Zusatzablage aus einer etwa horizontal verlaufenden Ablagefläche und wenigstens zwei Trägern besteht.

Bei der Nutzung von Kinderwagen wird meistens nicht nur ein kleines Kind transportiert sondern auch Gegenstände wie z. B. Einkäufe, Spielsachen oder andere Hilfsmittel für das kleine Kind. Und oft wird der Kinderwagen gleichzeitig noch von einem etwas größeren Kind begleitet. Falls das größere Kind noch zu klein ist, um größere Strecken allein zu gehen, muss auch das zweite Kind bequem transportiert werden.

Dazu sind nach aktuellem Stand der Technik Zusatzsitze für das größere Kind bekannt, die an dem Kinderwagen befestigt werden. Die meisten Zusatzsitze können jedoch nur aufwändig befestigt werden und sind oft nur für wenige oder nur ein einziges Modell eines Kinderwagens geeignet.

Die Europäische Patentanmeldung, EP 1 325 855, Wolstein, beschreibt eine horizontal angeordnete Platte, auf der das zweite Kind oberhalb der Füße des ersten Kindes sitzt. Der Nachteil dieser Platte ist, dass sie auf den Seitenwänden des Kinderwagens aufliegt. Dafür müssen die Seitenwände eine waagerechte Oberkante aufweisen, die zusätzlich noch entsprechend belastbar sein muss. Derartige Ausführungen von Kinderwagen werden auf aktuellem Stand der Technik zunehmend durch Leichtbauvarianten oder klappbare Ausführungen abgelöst, bei denen die Seitenwände meist aus flexiblem, Z.B. textilem Material bestehen und deshalb nicht mit einem nennenswerten Zusatzgewicht belastet werden können.

Das Gebrauchsmuster DE 295 17 712, Schweighart, beschreibt einen Zusatzsitz, der am Grundgestell oder am Haltebügel des Kinderwagens befestigt wird. Nachteilig ist, dass nicht nur die Dimensionen des Zusatzsitzes und seiner Befestigung sondern auch noch die Art der Befestigung auf die jeweilige, Bauweise des Kinderwagens abgestimmt werden muss. Dadurch kann ein solcher Zusatzsitz im ungünstigsten Fall nur für ein einziges Modell eines Kinderwagens genutzt werden. Zudem ist eine Verschiebung des Schwerpunktes - z. B. für Bergauf- oder Bergabfahrt - in Fahrtrichtung nicht ohne weiteres möglich.

Weitere Nachteile bekannter Zusatzsitze sind, dass die Montage meist relativ kompliziert und zeitaufwendig ist. Die zusätzlich Nutzung als Ablagefläche für Gegenstände zusammen mit oder anstatt eines weiteren Kindes wird nicht weiter unterstützt.

Das Ziel der vorliegenden Erfindung ist, einen Zusatzsitz für einen Kinderwagen zu entwickeln, der nach einfacher und schneller Montage in Verbindung mit einer Vielzahl von Kinderwägen zu verwenden ist und/oder auch als zusätzliche Ablage nutzbar ist.

Dieses Ziel der Erfindung wird durch eine Zusatzablage erreicht, bei der sich die Träger von der Ablagefläche nach unten bis zur Auflagefläche erstrecken und auf der Auflagefläche aufliegen

Es zählt zum Verdienst der Erfindung, erkannt zu haben, dass grundsätzlich jeder Kinderwagen eine zumindest teilweise horizontale Auflagefläche zum Tragen eines ersten Kindes aufweist. Diese Auflagefläche ist stets im Zentrum des Kinderwagens angeordnet und ist grundsätzlich eine mechanisch sehr hoch belastbare Fläche des gesamten Kinderwagens. Es ist ein wesentliches Merkmal der Erfindung, diese Auflagefläche zur Aufnahme der Zusatzablage zu nutzen.

Das zweite wesentliche Merkmal ist, das nur zwei Träger ausreichen, um die Ablagefläche der Zusatzablage zu halten. Im Normalfall stützt sich je ein Träger an der linken und an der rechten Seite des auf der Auflagefläche liegenden ersten Kindes ab. Dadurch wird nur ein sehr kleiner Teil der Auflagefläche in Anspruch genommen, so dass der Bewegungsspielraum für das erste Kind kaum eingeschränkt wird.

Ein weiterer Vorteil ist, dass die Zusatzablage dank ihrer einfachen Formgebung auch ohne weiteres für die Ablage von Gegenständen genutzt werden kann, insbesondere wenn sie etwas größer als die Ablagefläche ist und über deren Rand hinausragt.

Die Abmessung der Ablagefläche der Zusatzablage ist prinzipiell nicht begrenzt. Jedoch wird sie im Normalfall meist kleiner sein, als die Auflagefläche, auf der sie steht. Das hat den Vorteil, dass das erste Kind jederzeit zu einem wesentlichen Teil sichtbar ist und in den Kinderwagen hineingesetzt oder herausgenommen werden kann, ohne zuvor die Zusatzablage herausnehmen zu müssen.

Zumeist wird die Ablagefläche auch schmäler als die Auflagefläche sein, damit die Zusatzablage schnell und einfach in den Kinderwagen hinein gestellt werden kann und seitlich nicht übersteht. Dadurch bleibt die gewohnte Manövrierfähigkeit des Kinderwagens erhalten.

Wenn die Träger nur so hoch sind, dass sich die Ablagefläche zwischen den Seitenwänden des Kinderwagens befindet, ist dadurch vorgegeben, dass die Ablagefläche der Zusatzablage nicht breiter als die Auflagefläche im Kinderwagen sein kann. Dann werden die Seitenwände des Kinderwagens auch auf der Ablagefläche als Begrenzung nutzbar. Deshalb wird in der Praxis die Breite der Ablagefläche zumeist 70% bis 100% der Breite der Auflagefläche betragen.

Im Interesse der Standsicherheit der Zusatzablage und einer möglichst geringen Einschränkung der Bewegungsfreiheit für das erste Kind unten auf der Auflagefläche ist es sinnvoll, wenn die Träger der Zusatzablage zumindest teilweise in der Nähe von oder sogar direkt anliegend an eine der beiden Seitenwände verlaufen.

Dann befindet sich je ein Träger auf der rechten und auf der linken Seite des ersten Kindes. Im Normalfall liegt das erste Kind mit seiner Längsachse in Fahrtrichtung des Kinderwagens, so dass die Träger der Zusatzablage parallel zur rechten und linken Seitenwand des Kinderwagens ausgerichtet sind.

Zum Beispiel bei sehr kleinen Kindern und relativ großen Liegeflächen ist es jedoch auch denkbar, dass das erste Kind quer zur Fahrrichtung ausgerichtet ist und dementsprechend auch die Träger der Zusatzablage quer zur Fahrtrichtung orientiert sind. Dann teilt ein Träger der Zusatzablage die Auflagefläche des Kinderwagens in zwei Bereiche.

Wenn die Höhe der Träger größer ist als die größte Höhe des größten liegenden Kindes, zu dessen Transport der Kinderwagen vorgesehen ist, kann die Ablagefläche über das gesamte, erste Kind hinweg reichen oder das erste Kind kann wahlweise mit den Füßen oder mit dem Kopf unter die Ablagefläche gelegt werden.

Die größte Höhe des liegenden Kindes hängt davon ab, ob freie Bewegungen der Arme und/oder der Beine möglich sein sollen oder nicht. Wenn z.B. ein begrenzter Bewegungsraum für die Beine des Kindes definiert wird, und nur Bauch und Beine unterhalb der Ablagefläche liegen, kann die Höhe der Träger im Extremfall so niedrig wie die Höhe der Beine in liegender Position des Kindes werden. Zum Hineinlegen und zum Herausnehmen des Kindes wird dann in der Regel die Zusatzablage abgehoben werden müssen. In der Praxis wird die Höhe der Träger oft zwischen 10 cm und 30 cm liegen.

In einer einfachen und wirtschaftlich sinnvollen Bauform bestehen bei einer erfindungsgemäßen Zusatzablage die Ablagefläche und beide Träger jeweils aus plattenförmigem Material. Wenn die beiden Träger jeweils an zwei gegenüberliegenden Kanten der Ablagefläche angeordnet werden, ergibt sich ein zweifach abgewinkelter, U-förmiger Streifen. Ähnlich wie ein Sitzmöbel auf einer Fläche aufgestellt wird, wird auch dieser U-förmige Streifen auf die Auflagefläche des Kinderwagens aufgesetzt.

Wenn die Auflagefläche des Kinderwagens aus sehr festem Material wie zum Beispiel einer Platte oder parallelen Streben besteht, kann die Stirnfläche der Träger als Standfläche ausreichen. Wenn der dadurch ausgeübte Druck auf die Auflagefläche jedoch zu hoch ist, kann er reduziert werden, indem die Unterkante der beiden Träger jeweils durch wenigstens eine leistenförmige Strebe oder Kufe verlängert wird, die parallel zur Ablagefläche verläuft. Dadurch wird die Auflagekraft auf eine größere Fläche verteilt, wodurch die Kraft pro Flächeneinheit, also der Druck, weiter absinkt.

Für eine weitere Verringerung des Drucks kann an der Unterkante beider Träger jeweils eine Standplatte angebracht werden, die in das Innere des Kinderwagens weist und parallel zur Ablagefläche ausgerichtet ist. Die Standplatte sorgt für eine noch weitere Verteilung der Kraft und minimiert dadurch den Druck.

Auch wenn die Standplatte unter eine Matratze auf der Auflagefläche ragt, ist es sinnvoll, dass ihre Dicke zu ihrem freien Ende hin abnimmt. Dadurch wird ein störender Absatz am Ende der Standplatte vermieden, der den Liegekomfort des ersten Kindes beeinträchtigen würde Die Standplatte erhöht auch insgesamt die Stabilität der Zusatzablage.

Falls eine noch höher belastbare Verbindung zwischen Zusatzablage und Kinderwagen erforderlich ist, schlägt die Erfindung vor, dass an der Unterkante wenigstens eines Trägers wenigstens ein Gurt und/oder eine Kette und/oder ein Seil befestigt ist und mit dem anderen, freien Ende am Kinderwagen oder am anderen Träger befestigt wird.

Der Gurt und/oder die Kette und/oder das Seil kann jeweils in der Länge verstellbar sein und am freien Ende kann ein Haken oder ein ähnliches Befestigungselement angebracht werden, das in das Gestell des Kinderwagens oder in eine zum Haken komplementäre Aussparung in anderen Träger der Zusatzablage eingehakt wird.

Die Ablagefläche der Zusatzablage kann zwecks Nutzung als Sitzfläche gepolstert sein. Alternativ oder zusätzlich kann die Ablagefläche als ergonomische Sitzfläche für das zu transportierende zweite Kind ausgeformt sein. Weitere Ausstattungsvarianten sind eine Rückenlehne, ein Haltegriff oder eine weitere Seitenwand an der Zusatzablage. An der Zusatzablage kann auch ein Gurt zum Sichern des zweiten Kindes angebracht sein.

In einer interessanten Ausführungsform sind die Träger der Zusatzablage aus elastischem Material geformt, so dass die Distanz zwischen ihren unteren Enden zwischen 80 und 105% der Breite der Ablagefläche variiert werden kann. Mit dieser Flexibilität kann die Zusatzablage an voneinander abweichende Größen verschiedener Kinderwagenmodelle besser angepasst werden.

Dann ist keine exakte Anpassung der Breite der Ablagefläche an die Breite der Auflagefläche des Kinderwagens erforderlich. Dennoch ist es natürlich denkbar, für unterschiedlich breite Ausführungen von Kinderwagen verschiedene Größen der Zusatzablage zu fertigen.

Zum leichten Transport von mitgeführten Kleinteilen, wie Spielzeugen, Fläschchen usw. kann die Zusatzablage in einen Sitzbereich, auf dem das zweite Kind sitzt, und in mindestens einen Lagerbereich aufgeteilt werden. Dieser Lagerbereich kann als von der Sitzfläche aus nach unten verlaufende Vertiefung ausgebildet werden und in einer weiteren Variante durch einen Deckel verschlossen werden.

Außerdem kann in den Lagerbereich ein herausnehmbarer Transportbehälter eingesetzt werden. In einer weiteren Variante ist innerhalb des Lagerbereiches wenigstens einer der Träger als ein Traghohlkörper ausgebildet ist, in den zu transportierende Gegenstände einbringbar sind. Möglich sind u.a. ein Ständer für lange, runde Gegenstände wie z.B. einen Regenschirm oder ein Ablagefach für plattenförmige Gegenstände wie z.B. Zeitungen.

Zusätzlich können die Seiten der Zusatzablage Haken oder andere Befestigungselemente zur temporären Aufnahme von Handtaschen, Einkaufstüten, Kleidungsstücken oder anderen Gegenständen aufweisen.

Als eine weitere Ausstattungsvariante sind an die Zusatzablage zusätzliche, flächige Elemente als Schutz gegen Niederschläge oder Sonnenstrahlen ansteckbar oder von der Zusatzablage ausschwenkbar oder ausziehbar.

An die Unterseite der Zusatzablage können Spielgeräte oder andere Hilfsmittel oder entsprechende Halterungen zur.Nutzung durch das erste Kind angebracht werden.

Der etwa U-förmige Grundkörper einer erfindungsgemäßen Zusatzablage kann besonders wirtschaftlich in großen Stückzahlen hergestellt werden, wenn er als ein Stück gegossen, gespritzt, aufgeschäumt, gebogen oder gepresst wird.

Natürlich ist auch eine mehrteilige Fertigung möglich. Zum Beispiel können Ablagefläche und beide Träger als Einzelteile an den Endverbraucher geliefert werden, der Sie erst bei konkretem Bedarf zusammensteckt. Nach dem Gebrauch kann er die Teile wieder auseinander nehmen und platzsparend verstauen.

In dieser Variante ist auch eine einfache Anpassung an verschieden breite Kinderwagen möglich, z.B. durch mehrere, gleichartige Befestigungsmöglichkeiten für die Träger in der Ablagefläche, von denen jeweils nur ein Paar gleichzeitig genutzt wird und die übrigen - mit anderen Abständen zueinander - erst in einem Kinderwagen mit deutlich anderer Breite genutzt werden.

Eine Zusatzablage lässt sich an verschiedene Breiten der Kinderwägen alternativ durch das Verschieben oder die Verschwenkung von wenigstens einem Träger gegenüber der Ablagefläche anpassen. Dabei kann die Schwenkachse parallel zur Sitzfläche ausgerichtet sein. Zur Anpassung an verschiedene Breiten werden die Träger in verschiedene Winkel geschwenkt und in dieser Stellung fixiert, z.B. durch eine ebenfalls abklappbare und ggf. einrastbare Strebe.

Wenn die Schwenkachse vertikal zur Ablagefläche orientiert ist, kann zwischen Träger und Verschwenkachse noch ein Ausleger angeordnet werden, so dass Träger und Ausleger ein L-förmiges Bauteil bilden. Zur Verstellung des Abstandes zwischen den beiden Trägern wird dann wenigstens ein Ausleger parallel zur Sitzfläche verschwenkt.

Im Folgenden sollen weitere Einzelheiten und Merkmale der Erfindung anhand von Beispielen näher erläutert werden. Diese sollen die Erfindung jedoch nicht einschränken, sondern nur erläutern. Es zeigt in schematischer Darstellung:
- Figur 1: perspektivische Ansicht einer Zusatzablage in Minimalversion
- Figur 2: Zusatzablage wie Fig1, jedoch mit zusätzlichen Standplatten
- Figur 3a: Schnitt durch einen Kinderwagen mit Zusatzablage quer zur Fahrrichtung
- Figur 3b: Schnitt durch einen Kinderwagen mit Zusatzablage und zwei Kindern parallel zur Fahrtrichtung
- Figur 4: seitliche Ansicht einer Zusatzablage mit Traghohlkörper
- Figur 5: seitliche Ansicht einer Zusatzablage mit integriertem Transportbehälter

### Die Figuren zeigen im Einzelnen:

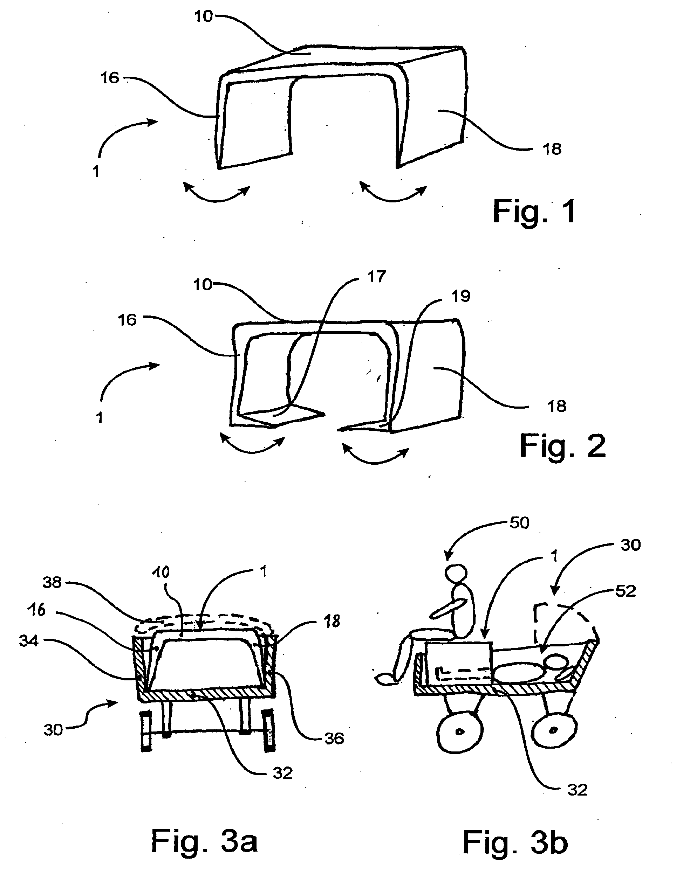

In **Figur 1** wird ein Ausführungsbeispiel einer Zusatzablage (1) in Minimalversion perspektivisch dargestellt. Die beiden Träger (16) und (18) grenzen an zwei gegenüberliegende Kanten der Ablagefläche (10) an und erstrecken sich von dort aus im Wesentlichen senkrecht nach unten. Auf diese Weise bilden sie einen U-förmigen Körper, der auf den Unterkanten der beiden Träger (16) und (18) ruht.

Die gezeigte Ausführungsform weist plattenförmige Träger auf. Diese Form eignet sich zur einstückigen Herstellung aus dem gleichen Material für die Träger (16, 18) und die Sitzfläche (10) wie z. B. Kunststoff. Sie kann aus Hartschaum-Plastikmaterial oder als Hohlgeblasener Plastikkörper produziert werden. Eine Ausführung der Zusatzablage (1) aus einem tragfähigen Hartschaum bietet Elastizität zur Anpassung an unterschiedliche Breiten der Kinderwägen (30), ein geringes Gewicht der Zusatzablage (1) und eine weiche und angenehme Sitzoberfläche auf der Ablagefläche (10).

Figur 1 erleichtert die Vorstellung, dass die Träger (16) und (18) jedoch alternativ als parallele Säulen, als Gitterwerk oder als mit Rippen verstärkte, dünne Platte geformt werden können.

In **Figur 2** ist bei der bereits in Figur 1 gezeigten Zusatzablage die Auflagefläche der Unterkanten der Träger (16,18) verbreitert, indem daran jeweils eine Standplatte (17) und (19) angesetzt ist, deren Dicke zum freien Ende in und damit auch zur Mitte der - in Figur 2 nicht eingezeichneten Auflagefläche (32) hin abnimmt. Dadurch wird für das erste Kind (52) unten auf der Auflagefläche (32) des Kinderwagens (30) ein sanfter Übergang ohne unangenehme Kanten zur Auflagefläche (32) ermöglicht.

In **Figur 3a** ist ein Schnitt durch einen Kinderwagen (30) mit Zusatzablage (1) quer zur Fahrtrichtung des Kinderwagens (30) wiedergegeben.

Deutlich wird, dass der Kinderwagen (30) einen kastenartigen Aufbau mit der Auflagefläche (32) aufweist, die von den Seitenwänden (34) und (36) beidseits begrenzt wird. In diesen Aufbau ist eine Zusatzablage (1) so hineingestellt, dass sie mit Ihren beiden Trägern (16,18) an die Seitenwänden (34) und (36) heranreicht.

In Figur 3a wird deutlich, weshalb es vorteilhaft ist, dass die Träger (16, 18) an der Ablagefläche (10) derart befestigt sind, dass die Distanz zwischen den oberen Enden der Träger (16, 18) 70% bis 100% der Breite der horizontalen Auflagefläche 32 entspricht: Die Zusatzablage (10) kann dann sehr schnell und einfach ohne zusätzliche Befestigungseinrichtungen zwischen die Seitenwände (34,36) und auf die Auflagefläche (32) gestellt werden.

Durch die Auswahl eines elastischen Materials für die Träger (16, 18) und die Ablagefläche (10), sowie durch geeignete Gestaltung der jeweiligen Querschnitte, können die unteren Enden der Träger (16, 18) etwas zusammengedrückt oder auseinander gespreizt werden, und passen sich so an verschiedene Breiten der Auflagefläche 32 an.

Wenn die Träger (16, 18) - wie in Figur 3a gezeigt - ausgehend von ihrer Befestigungsstelle oben an der Ablagefläche 10 schräg nach außen und unten verlaufen, und wenn sie - wie zuvor beschrieben - elastisch ausgeführt sind, ist die Zusatzablage (1) für eine Vielzahl von Kinderwagen (30) verwendbar - wie in Figur 3a gut nachzuvollziehen ist.

In Figur 3a wird erkennbar, dass sich die Ablagefläche (10) alternativ auch über die Breite der Befestigungspunkte der Träger (16, 18) hinaus erstrecken könnte, um eine Vergrößerung der Fläche zu erreichen. Dazu ragt die Ablagefläche (10) in dem gezeigten Ausführungsbeispiel über die Seitenwände (34,36) hinaus.

In **Figur 3b** ist der Schnitt durch einen Kinderwagen (30) mit Zusatzablage (1) und zwei Kindern (50,52) parallel zur Fahrtrichtung gezeichnet. Dabei verläuft die Schnittlinie unmittelbar neben einer Seitenwand (36) des Kinderwagens (30), so dass die Zusatzablage 1 nicht geschnitten wird, sondern ein Träger (16,18) sichtbar wird. Auf der Auflagefläche (32) des Kinderwagens (30) ruht ein erstes Kind (52). Seine Beine ragen unter die Zusatzablage (1).

In Figur 3b wird sofort deutlich, dass die Höhe der Träger (16, 18) größer als die Höhe eines durchschnittlichen liegenden ersten Kindes (52) sein sollte, welches in dem Kinderwagen (30) transportiert werden soll.

Im dargestellten Ausführungsbeispiel ist die Höhe der Träger (16, 18) größer als die Höhe der Beine des ersten Kindes (52) so dass sie bequem unter die Zusatzablage (1) geschoben werden können.

In den Fig. 3a und 3b ist gezeigt, wie die Höhe der Träger (16,18) die Ablagefläche (10) auf die gleiche Höhe wie die Oberkante der Seitenwände (34, 36) des Kinderwagens (30) bringt. Die Ablagefläche (10) kann jedoch auch höher als die Seitenwände angeordnet werden.

Wenn die Höhe der Träger (16,18) ebenso hoch oder geringfügig höher wie die Seitenwände (34,36) gewählt wird, kann eine am Kinderwagen (30) angebrachte Abdeckung (38) über der Zusatzablage (1) geschlossen werden und dient dann als Sitzpolster für die Ablagefläche (10).

In Figur 3b ist über dem ersten Kind (52) gestrichelt eine aufklappbare.Abdeckung z.B. als Sonnenschutz eingezeichnet. Es ist gut vorstellbar, dass eine solche oder ähnliche Abdeckung alternativ oder zusätzlich an der Zusatzablage (1) befestigt werden kann.

In den **Figuren 1 bis 5** **nicht eingezeichnet** ist, dass die Ablagefläche (10) gerade oder als ergonomische Sitzmulde für das zweite Kind (50) geformt sein kann. Ebenfalls nicht gezeigt ist, dass ein Sitzpolster auf der Ablagefläche (10) befestigt werden kann und dass zur Sicherung des zweiten Kindes 50 an der Zusatzablage (1) eine Rückenlehne angebracht sein.

Ebenfalls nicht dargestellt ist ein Gurt an der Zusatzablage (1), der das zweite Kind (50) gegen Herabfallen sichert oder ein Gurt der die gesamte Zusatzablage (1) mit dem Kinderwagen (30) verbindet.

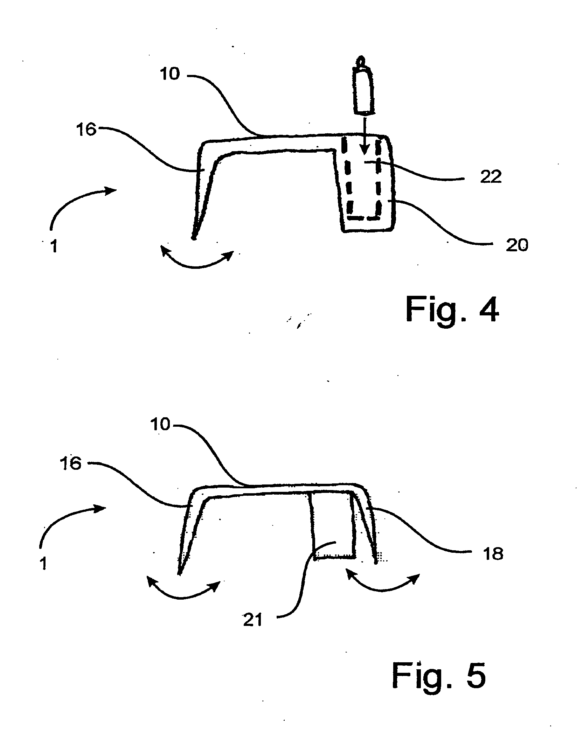

**Figur 4** zeigt die seitliche Ansicht einer Zusatzablage (1) mit einem Traghohlkörper (20). Rechts neben der Sitzfläche ist ein Lagerbereich (22) abgegrenzt, der in dieser Variante aus dem zu einem Traghohlkörper (20) aufgeweiteten Träger (18) besteht, welcher zusammen mit dem Träger (16) die waagerechte Ablagefläche (10) trägt. Der Traghohlkörper (20) ist nach oben offen, so dass kleine mitzuführende Gegenstände hineingelegt und transportiert werden können, wie zum Beispiel die in Figur 4 gezeigte Babyflasche, Spielzeuge oder sonstige Artikel für die Kinder (50, 52). Wenn der Traghohlkörper nur wenig breiter als ein Getränkefläschchen ist, kann es aufrecht transportiert werden ohne bei Erschütterungen umzufallen.

Im Vergleich zum Ausführungsbeispiel der Figur 1 ist der linke Träger 16 unverändert und kann wiederum elastisch ausgeführt werden. Der Träger (18) auf der rechten Seite ist jedoch zu einem Traghohlkörper (20) umgebildet und bildet den - bereits genannten - Lagerbereich (22).

Die nach oben geöffnete Tragstruktur (20) kann durch einen - hier nicht gezeigten - Deckel verschlossen werden. Der Deckel kann fest an dem Zusatzablage 1 angebracht sein oder kann getrennt davon vorgesehen sein.

Wenn die Zusatzablage (1) aus einem Hartschaum-Plastikmaterial hergestellt wird, hilft dessen Isolationsfähigkeit die Temperaturänderung von Getränkeflaschen in der Tragstruktur (20) zu bremsen.

**Figur 5** zeigt ein weiteres Ausführungsbeispiel des Lagerbereiches 22 der Zusatzablage (1). Die Zusatzablage (1) ist dabei ähnlich ausgeführt wie beim Ausführungsbeispiel der Figur 4, bei dem die Sitzfläche (10) ebenfalls - in der Zeichnung nach links - verschoben ist, um zu ermöglichen, dass ein nach oben offener Transportbehälter (21) eingesetzt werden kann, der den gleichen Lagerbereich (22) wie die hohle Tragstruktur (20) nutzt. Dieser Transportbehälter (21) kann in einem Stück zusammen mit der Zusatzablage (1) gefertigt werden oder er kann in eine Öffnung in der Ablagefläche (10) eingesetzt werden. Der Transportbehälter (21) wird vorteilhafter Weise aus einem isolierenden Material hergestellt, um die Temperatur von kühlen oder warmen Inhalten recht lange zu halten.

### Bezugszeichenliste

- 1: Zusatzablage, liegt auf Auflagefläche (32) auf
- 10: Ablagefläche, horizontaler Teil der Zusatzablage 1
- 16: erster Träger der Zusatzablage 1, an Ablagefläche 10 befestigt, liegt auf Auflagefläche 32 auf
- 17: erste Standplatte, an der Unterkante des ersten Trägers 16 befestigt, liegt auf Auflagefläche 32 auf
- 18: zweiter Träger der Zusatzablage 1, an Ablagefläche 10 befestigt, liegt auf Auflagefläche 32 auf
- 19: zweite Standplatte, an der Unterkante des zweiten Trägers 18 befestigt, liegt auf Auflagefläche 32 auf
- 20: Traghohlkörper, Ausführungsvariante eines der Träger 16 oder 18
- 21: Transportbehälter, im Lagerbereich 22 integriert
- 22.: Lagerbereich der Zusatzablage 1
- 30: Kinderwagen, enthält die horizontale Auflagefläche 32
- 32: Auflagefläche, im Kinderwagen 30
- 34: erste Seitenwand des Kinderwagens 30
- 36: zweite Seitenwand des Kinderwagens 30
- 38: Abdeckung des Kinderwagens 30
- 50: zweites Kind, kann auf Ablagefläche 10 sitzen
- 52: erstes Kind, liegt auf Auflagefläche 32

## Patentansprüche

1. Kinderwagen (30) mit einer Zusatzablage (1), wobei
- der Kinderwagen (30) eine zumindest teilweise horizontale Auflagefläche (32) zum Tragen eines ersten Kindes (52) aufweist, die von zwei Seitenwänden (34, 36) begrenzt wird und
- die Zusatzablage (1) aus einer etwa horizontal verlaufenden Ablagefläche (10) und wenigstens zwei Trägern (16, 18) besteht
**dadurch gekennzeichnet, dass**
- sich die Träger (16, 18) von der Ablagefläche (10) nach unten bis zur Auflagefläche (32) erstrecken und
- auf der Auflagefläche (32) aufliegen.

2. Kinderwagen (30) mit einer Zusatzablage (1) nach Anspruch 1, **dadurch gekennzeichnet, dass** die Distanz zwischen den oberen Enden der Träger (16, 18) 70% bis 100% der Breite der Auflagefläche (32) entspricht.

3. Kinderwagen (30) mit einer Zusatzablage (1) nach einem der vorhergehenden Ansprüche, **dadurch gekennzeichnet, dass** je ein Träger (16, 18) zumindest teilweise in der Nähe von oder direkt anliegend an eine der beiden Seitenwände (34, 36) verläuft.

4. Kinderwagen (30) mit einer Zusatzablage (1) nach einem der vorhergehenden Ansprüche, **dadurch gekennzeichnet, dass** sich je ein Träger (16, 18) auf beiden Seiten des ersten Kindes (52) befindet.

5. Kinderwagen (30) mit einer Zusatzablage (1) nach einem der vorhergehenden Ansprüche, **dadurch gekennzeichnet, dass** die Höhe der Träger (16, 18) größer ist als die größte Höhe des größten liegenden Kindes (52) ist, zu dessen Transport der Kinderwagen (30) vorgesehen ist.

6. Kinderwagen (30) mit einer Zusatzablage (1) nach einem der vorhergehenden Ansprüche, **dadurch gekennzeichnet, dass** die Ablagefläche (10) und die Träger (16, 18) jeweils aus plattenförmigem Material bestehen.

7. Kinderwagen (30) mit einer Zusatzablage (1) nach einem der vorhergehenden Ansprüche, **dadurch gekennzeichnet, dass** die Träger (16, 18) mit zwei gegenüberliegenden Kanten der Ablagefläche (10) verbunden sind.

8. Kinderwagen (30) mit einer Zusatzablage (1) nach einem der vorhergehenden Ansprüche, **dadurch gekennzeichnet, dass**
- die Unterkante beider Träger (16, 18) jeweils durch wenigstens eine Strebe verlängert ist, die parallel zur Ablagefläche (10) verläuft oder
- an der Unterkante beider Träger (16, 18) jeweils eine Standplatte (17, 19) angebracht ist,
- die in das Innere des Kinderwagens (30) weist und
- parallel zur Ablagefläche (10) ausgerichtet ist und
- deren Dicke zu ihrem freien Ende hin abnimmt.

9. Kinderwagen (30) mit einer Zusatzablage (1) nach einem der vorhergehenden Ansprüche, **dadurch gekennzeichnet, dass** an der Unterkante wenigstens eines Trägers (16, 18) wenigstens
- ein Gurt und/oder
- eine Kette und/oder
- ein Seil
befestigt ist, welche (r,s) jeweils in der Länge verstellbar ist und an ihrem freien Ende ein Haken oder eine Schnalle oder ein Klettverschluss oder ein ähnliches Befestigungselement angebracht ist.

10. Kinderwagen (30) mit einer Zusatzablage (1) nach einem der vorhergehenden Ansprüche, **dadurch gekennzeichnet, dass** die Ablagefläche (10)
- gepolstert ist und/oder
- ergonomisch als Sitzfläche für ein zu transportierendes zweites Kind (50) ausgebildet ist.

11. Kinderwagen (30) mit einer Zusatzablage (1) nach einem der vorhergehenden Ansprüche, **dadurch gekennzeichnet, dass** an der Ablagefläche (10)
- eine Rückenlehne und/oder
- wenigstens ein Haltegriff und /oder
- wenigstens eine Seitenwand und/oder
- ein Gurt zum Sichern
für das zweite, zu transportierende Kind (50) angebracht ist.

12. Kinderwagen (30) mit einer Zusatzablage (1) nach einem der vorhergehenden Ansprüche, **dadurch gekennzeichnet, dass**
- die Breite der Ablagefläche (10) der Breite der Auflagefläche (32) entspricht und
- die Träger (16, 18) aus dauerhaft elastischem Material geformt sind und soweit verformbar sind, dass die Distanz zwischen ihren unteren Enden zwischen 80 und 105% der Breite der Ablagefläche (10) variiert werden kann.

13. Kinderwagen (30) mit einer Zusatzablage (1) nach einem der vorhergehenden Ansprüche, **dadurch gekennzeichnet, dass**
die Ablagefläche (10) aufgeteilt ist
- in einen Sitzbereich, auf dem ein zweites Kind (50) sitzen kann, und
- in mindestens einen Lagerbereich (22),
- der eine von der Ablagefläche (10) aus nach unten verlaufende Vertiefung aufweist und/oder
- in den ein herausnehmbarer Transportbehälter (21) einsetzbar ist und/oder
- wenigstens einer der Träger (16,18) als ein Traghohlkörper (20) ausgebildet ist, in den zu transportierende Gegenstände einbringbar sind.

14. Kinderwagen (30) mit einer Zusatzablage (1) nach einem der vorhergehenden Ansprüche, **dadurch gekennzeichnet, dass** an die Zusatzablage (1)
- zusätzliche, flächige Elemente als Schutz gegen Niederschläge oder Sonnenstrahlen ansteckbar oder von der Zusatzablage (1) ausschwenkbar oder ausziehbar sind und/oder
- an die Unterseite Spielgeräte oder andere Hilfsmittel oder entsprechende Halterungen zur Nutzung durch das erste Kind (52) angebracht sind und/oder
- die Seiten Haken oder andere Befestigungselemente zur temporären Aufnahme von Handtaschen, Einkaufstüten, Kleidungsstücken oder anderen Gegenständen aufweisen.

15. Verfahren zur Herstellung einer Zusatzablage (1) nach einem der vorhergehenden Ansprüche, **dadurch gekennzeichnet, dass** sie als ein Stück
- gegossen oder
- gespritzt oder
- aufgeschäumt oder
- gebogen oder
- gepresst
wird.
